(19) Europäisches Patentamt
European Patent Office
Office européen des brevets

(11) EP 3 230 292 B1

(12) **FASCICULE DE BREVET EUROPEEN**

(45) Date de publication et mention de la délivrance du brevet:
**02.10.2019 Bulletin 2019/40**

(21) Numéro de dépôt: **15818014.1**

(22) Date de dépôt: **11.12.2015**

(51) Int Cl.:
*C07F 7/08* (2006.01)

(86) Numéro de dépôt international:
**PCT/FR2015/053458**

(87) Numéro de publication internationale:
**WO 2016/092237 (16.06.2016 Gazette 2016/24)**

(54) **AGENT DE TRANSFERT POUR LA PRÉPARATION D'UNE POLYOLÉFINE FONCTIONNELLE OU TÉLÉCHÉLIQUE**

TRANSFERMITTEL ZUR HERSTELLUNG EINES FUNKTIONELLEN ODER TELECHELEN POLYOLEFINS

TRANSFER AGENT FOR THE PREPARATION OF A FUNCTIONAL OR TELECHELIC POLYOLEFIN

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **12.12.2014 FR 1462328**

(43) Date de publication de la demande:
**18.10.2017 Bulletin 2017/42**

(73) Titulaires:
- **Compagnie Générale des Etablissements Michelin**
  **63000 Clermont-Ferrand (FR)**
- **Université Claude Bernard Lyon 1**
  **69622 Villeurbanne (FR)**
- **Centre National de la Recherche Scientifique**
  **75794 Paris Cedex 16 (FR)**
- **CPE Lyon Formation Continue et Recherche**
  **69622 Villeurbanne (FR)**

(72) Inventeurs:
- **CORTIAL, Guillaume**
  **63040 Clermont-Ferrand Cédex 9 (FR)**
- **THUILLIEZ, Julien**
  **63040 Clermont-Ferrand Cédex 9 (FR)**
- **BOISSON, Christophe**
  **01390 Tramoyes (FR)**
- **D'AGOSTO, Franck**
  **69740 Genas (FR)**
- **NORSIC, Sébastien**
  **69006 Lyon (FR)**

(74) Mandataire: **Gandon-Pain, Sylvie**
**Manufacture Française des Pneumatiques Michelin**
**CBS/CORP/J/PI - F35 - Ladoux**
**23, place des Carmes-Déchaux**
**63040 Clermont-Ferrand Cedex 9 (FR)**

(56) Documents cités:
- **DATABASE CA [Online] CHEMICAL ABSTRACTS SERVICE, COLUMBUS, OHIO, US; FELIX, ANA M. ET AL: "Insertion of CO2 into divalent group 2 and 12 bis(silylamides)", XP002742937, extrait de STN Database accession no. 2012:595897 -& FELIX, ANA M. ET AL: "Insertion of CO2 into divalent group 2 and 12 bis(silylamides)", MAIN GROUP CHEMISTRY , 11(1), 13-29 CODEN: MGCHE7; ISSN: 1024-1221, 2012, XP008177101, DOI: 10.3233/MGC-2012-0057 10.3233/MGC-2012-0057**
- **CORNELIA SCHMAUNZ ET AL: "Inter- and Intramolecular [4+2]-Cycloaddition Reactions with 4,4-Disubstituted N-Silyl-1,4-dihydropyridines as Precursors for N-Protonated 2-Azabutadiene Intermediates", SYNTHESIS, vol. 46, no. 12, 1 avril 2014 (2014-04-01) , pages 1630-1638, XP055204488, ISSN: 0039-7881, DOI: 10.1055/s-0033-1341044**
- **KEI MURAKAMI ET AL: "Cobalt-Catalyzed Benzylzincation of Alkynes", CHEMISTRY - A EUROPEAN JOURNAL, vol. 16, no. 26, 12 juillet 2010 (2010-07-12), pages 7688-7691, XP055204484, ISSN: 0947-6539, DOI: 10.1002/chem.201001061**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

- BASHA F Z ET AL: "A NOVEL THREE CARBON-AMINO GRIGNARD REAGENT - ITS USE IN AN EFFICIENT PYRROLIDINE SYNTHESIS", TETRAHEDRON LETTERS, PERGAMON, GB, vol. 25, no. 46, 1 janvier 1984 (1984-01-01), pages 5271-5274, XP001021169, ISSN: 0040-4039, DOI: 10.1016/S0040-4039(01)81581-1
- LANGER F ET AL: "Preparation of polyfunctional phosphines using zinc organometallics", TETRAHEDRON ASYMMETRY, PERGAMON PRESS LTD, OXFORD, GB, vol. 8, no. 5, 13 mars 1997 (1997-03-13), pages 715-738, XP004094333, ISSN: 0957-4166, DOI: 10.1016/S0957-4166(97)00027-X
- DATABASE REAXYS [Online] ELSEVIER; 1989, Larcheveque et al: "XRN 5505121", XP002753781, Database accession no. XRN 5505121 & LARCHEVEQUE ET AL: BULL. CHEM. SOC. CHIM. FR., 1989, pages 130-139,
- DATABASE REAXYS [Online] ELSEVIER; 2007, Allef et al: "XRN 15774419", XP002753782, Database accession no. XRN 15774419 & ALLEF ET AL: HETEROCYCLES, vol. 74, 2007, pages 421-436,
- AGAI B ET AL: "convenient, benign and scalable synthesis of 2- and 4-substituted benzylpiperidines", EUROPEAN JOURNAL OF ORGANIC CHEMISTRY, WILEY-VCH, 1 January 2004 (2004-01-01), pages 3623-3632, XP002346569, ISSN: 1434-193X, DOI: 10.1002/EJOC.200400215

**Description**

## DOMAINE DE L'INVENTION

La présente invention concerne des composés appelés agents de transferts fonctionnels, et un procédé de synthèse desdits agents de transferts fonctionnels. Ces agents de transfert peuvent être utilisés dans un procédé de synthèse de polyoléfines fonctionnelles ou téléchéliques, mais aussi des polyoléfines fonctionnelles ou téléchéliques dont une (ou à chaque) extrémité de la chaîne de polymère principale a été fonctionnalisée. Ces polyoléfines peuvent être utilisées comme matrice / structure de base dans des matériaux organiques, inorganiques, hybrides ou composites.

## ETAT ANTERIEUR DE LA TECHNIQUE

De manière générale, un polymère pouvant engendrer une nouvelle polymérisation ou une nouvelle réaction est dénommé « polymère fonctionnel » eu égard à la réactivité de l'une de ses extrémités de chaînes, ou « polymère téléchélique » eu égard à la réactivité de chacune de ses extrémités de chaînes. Dans ce type de molécules, les groupes réactifs situés aux extrémités de chaînes ne proviennent pas des monomères.

Plusieurs méthodologies de synthèse de polyoléfines fonctionnelles à base d'éthylène ont été décrites dans l'art antérieur.

Une première méthode consiste à polymériser l'éthylène (et/ou une mono-alpha oléfine) en présence d'un système catalytique bi-composant à base d'un agent de transfert. Ce type de méthode permet notamment d'obtenir une polyoléfine à terminaison vinyle (Boisson, D'Agosto et al, Angew Chem Int Ed Engl. 2013, 52, 3438-3441). Cette terminaison vinyle peut être modifiée chimiquement par le biais d'étapes supplémentaires (T. Chenal et M. Visseaux, « End-capped Oligomers of Ethylene, Olefins and Dienes, by means of Coordinative Chain Transfer Polymerization using Rare Earth Catalysts », INTECH, 2014, 4 - Oligomerization of chemical and biological compounds, chapitre 1, pages 3-30).

Une seconde méthode consiste à modifier par voie chimique, en masse ou en solution, la polyoléfine. Il s'agit généralement de réactions de type radicalaire qui permettent l'introduction de fonctionnalité le long de la chaîne principale du polymère. Cependant, cette méthode présente au moins les deux inconvénients suivants :

- la formation d'architectures ramifiées ou branchées qui peuvent altérer les propriétés de la polyoléfine,
- l'introduction de manière aléatoire de groupements fonctionnels, et non de façon contrôlée en bout de la chaîne principale du polymère.

Une troisième méthode consiste à :

- polymériser de manière contrôlée un monomère diénique par voie anionique,
- fonctionnaliser ce polymère par un agent de terminaison fonctionnel,
- hydrogéner ce polymère de telle sorte à obtenir une polyoléfine fonctionnelle.

Cette troisième méthode présente l'inconvénient de nécessiter une succession d'étapes et l'utilisation de différents types de solvants, ce qui peut la rendre complexe et coûteuse.

Plusieurs voies de synthèse de polymères téléchéliques ont été décrites dans l'art antérieur. Toutefois, s'agissant de la synthèse de polyoléfines téléchéliques, trois principales méthodes ont été développées :

(i) La première concerne la synthèse d'un polybutadiène hydroxy-téléchélique par voie anionique. Le butadiène est tout d'abord polymérisé avant une étape d'hydrogénation des insaturations de la chaîne polymère. Le polyéthylène téléchélique ainsi obtenu présente des extrémités de chaîne identiques, il est également ramifié eu égard à la présence des groupes éthyle résultant des unités 1,2 du butadiène. Ce type de polymère est disponible commercialement sous le nom de Kraton L2203.

(ii) Une autre voie de synthèse concerne la polymérisation par métathèse par ouverture du cycle du cyclooctadiène. Le polymère obtenu est ensuite hydrogéné pour donner une polyoléfine hydroxy-téléchélique (Hillmyer et al. Macromolecules 1995, 28, 7256-7261).

(iii) Enfin, la polymérisation vivante de l'éthylène a également été abordée en présence d'un complexe à base de palladium. Ce complexe permet non seulement d'amorcer la réaction de polymérisation vivante de l'éthylène, mais aussi de fonctionnaliser les extrémités de chaînes. Le polyéthylène ramifié téléchélique obtenu présente en extrémités de chaîne soit des fonctions ester identiques soit une fonction ester et une fonction cétone (Brookhart, Macromolecules 2003, 36, 3085). Dans la même veine, le document US 2007/0010639 décrit la synthèse en trois

étapes de polypropylène téléchélique présentant des extrémités de chaînes polaires. Des monomères oléfiniques portant des fonctionnalités protégées sont utilisés en début de polymérisation pour créer un court segment portant ces fonctions latéralement. La (co)polymérisation de propylène est ensuite entreprise. Puis, un monomère fonctionnel est utilisé à nouveau pour former un deuxième court segment terminal portant des fonctions latéralement.

Par le terme « polymérisation vivante », on entend une polymérisation en chaîne ne comprenant pas de réactions de transfert ou de terminaison de chaîne. Les polymérisations vivantes des oléfines permettent de préparer des polymères fonctionnels à une ou aux deux extrémités de la chaîne. Cependant, dans le domaine de la polymérisation des oléfines, les polymérisations vivantes sont limitées par le fait qu'on ne produit qu'une seule chaîne par métal de transition ce qui pose un problème en termes de coût de production. La polymérisation par catalyse de coordination présente l'avantage de produire un grand nombre de chaînes par métal de transition. Il y a donc un besoin de disposer d'un système permettant de préparer des polyoléfines téléchéliques, notamment du polyéthylène, dans des conditions de polymérisation par catalyse de coordination satisfaisantes en termes de coût de production.

Le document WO2013/135314 décrit une polyoléfine téléchélique dont au moins un bout de la chaîne polymère est nécessairement un groupement vinyle qui peut éventuellement être fonctionnalisé. Cette polyoléfine est obtenue par polymérisation d'éthylène en présence d'un agent de transfert comprenant une fonction vinyle. Le procédé décrit dans cet art antérieur concerne plus particulièrement une polyoléfine obtenue par polymérisation d'au moins 95 % molaire d'éthylène, en présence d'un agent de transfert de type di(alcényl)magnésium contenant de préférence 6 à 9 groupements $CH_2$ entre le magnésium et la fonction vinyle.

En ce qui concerne les composés de l'art antérieur désignés comme agents de transfert fonctionnels, ils présentent certaines limitations.

A titre d'exemple, le document WO2013/135314 décrit des agents de transfert fonctionnels de type $Mg((CH_2)_9\text{-}CH{=}CH_2)_2$, pouvant être utilisés pour préparer des polyoléfines téléchéliques. Ces derniers présentent l'inconvénient d'apporter une fonctionnalité vinyle $CH{=}CH_2$ à une extrémité de chaîne, fonction dépourvue d'hétéroatomes, ce qui dans certaines applications peut constituer une limitation.

Le document US 2013/0274407 décrit des agents de transfert fonctionnels répondant à la formule (AT) ci-dessous. Ces composés permettent d'introduire, à une extrémité de chaîne du polybutadiène, des groupements aromatiques porteurs d'hétéroatomes. Cependant, la présence d'un noyau aromatique peut être limitante selon l'application envisagée.

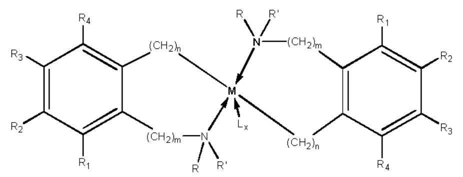

(AT)

BASHA F Z ET AL: "A NOVEL THREE CARBON-AMINO GRIGNARD REAGENT - ITS USE IN AN EFFICIENT PYRROLIDINE SYNTHESIS",TETRAHEDRON LETTERS, PERGAMON, GB, vol. 25, no. 46, 1984, pages 5271-5274 enseigne la formation de MgBr((CH2)3N(SiMe2CH2CH2SiMe2)) comme composé organomagnésien à partir de Mg activé avec I2 et le propyle bromide protégé.

Le problème que se propose de résoudre la présente invention concerne notamment la synthèse d'une polyoléfine dont une ou les deux extrémités de la chaîne principale est/sont fonctionnalisé(es) et modifiable(s). Cette polyoléfine peut notamment être un homopolyéthylène ou un copolymère obtenu par copolymérisation de l'éthylène avec une $\alpha$-mono-oléfine.

## EXPOSE DE L'INVENTION

Les Demanderesses ont mis au point un agent de transfert qui permet la préparation d'une polyoléfine dont au moins une, avantageusement les deux, extrémité(s) de chaîne présente(nt) chacune un groupement fonctionnel. En d'autres termes, il s'agit d'un agent de transfert qui permet la préparation d'une polyoléfine dont au moins une des extrémités peut aisément réagir afin de faciliter l'incorporation de ladite polyoléfine dans, par exemple, un environnement hydrophile ou hydrophobe, dans des matériaux organiques, inorganiques, hybrides, composites.

Cette polyoléfine est avantageusement téléchélique (fonctionnalisation des deux extrémités) et linéaire. Elle présente avantageusement deux extrémités de chaînes distinctes, pouvant réagir de manière sélective eu égard à leur différence de réactivité.

Les Demanderesses ont mis au point des composés désignés comme agent de transfert fonctionnel, et leur procédé de préparation.

La polyoléfine dont la synthèse est rendue possible par l'utilisation de l'agent de transfert conforme à l'invention porte au moins une fonction en extrémité de chaîne, issue du composé désigné comme agent de transfert fonctionnel, répondant à la formule (II).

Plus précisément, le procédé de préparation d'une polyoléfine ayant au moins un bout de chaîne fonctionnalisé, comprend 'étape (a) suivante :

(a) préparation d'un composé de formule (I), par homopolymérisation d'éthylène ou par copolymérisation d'éthylène et d'une alpha-mono-oléfine en présence d'un agent de transfert de formule (II) :

$Y\text{-}(A\text{-}(CH_2)_p\text{-}B')_m$ (I)

$Y((CH_2)_pB')_m$ (II)

dans lesquelles :

- lorsque m = 2, Y est un alcalino-terreux, et lorsque m = 3, Y est l'aluminium ;
- A est une chaîne polymère obtenue par polymérisation de l'éthylène ou par copolymérisation de l'éthylène et d'une alpha-mono-oléfine ;
- B' est choisi dans le groupe comprenant $N(SiMe_3)_2$ et $N(SiMe_2CH_2CH_2SiMe_2)$ ;
- p est un nombre entier de 1 à 50, avantageusement de 1 à 11.

Selon un autre mode de réalisation ne faisant pas partie de la présente invention, B' pourrait être choisi parmi para-$C_6H_4(NMe_2)$ ; para-$C_6H_4(OMe)$ ; $C_6H_4(N(SiMe_3)_2)$ ; $C_6F_5$; $C_3F_7$ ; $C_6F_{13}$ ; et $CH(OCH_2CH_2O)$.

Dans la présente demande, on entend par « une » alpha-mono-oléfine une ou plusieurs alpha-mono-oléfines, de préférence une seule alpha-mono-oléfine.

Les composés précités $N(SiMe_3)_2$ ; $N(SiMe_2CH_2CH_2SiMe_2)$ ; $C_6F_5$ ; $C_3F_7$ ; $C_6F_{13}$ ; para-$C_6H_4$-$NMe_2$ ; para-$C_6H_4$-O-Me ; para-$C_6H_4$-$N(SiMe_3)_2$ ; et $CH(OCH_2CH_2O)$ correspondent respectivement aux composés suivants (* désigne un atome de carbone dépourvu d'hydrogène, et ** un groupement CH) :

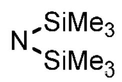 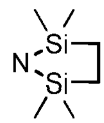

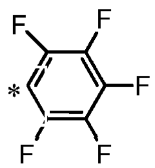

$C_3F_7$ $C_6F_{13}$

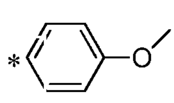 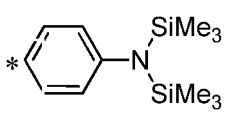 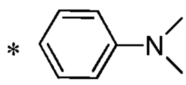

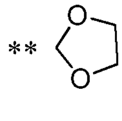

De manière générale, le groupement B' issu de l'agent de transfert n'est pas un groupement vinyle.

De manière avantageuse, la chaîne polymère A est un polyéthylène linéaire ou un copolymère obtenu par copolymérisation de l'éthylène et d'une alpha-mono-oléfine (une seule double liaison carbone = carbone polymérisable). Par alpha-mono-oléfine, on entend également le styrène et tout autre monomère de type vinyl-aromatique.

L'alpha-mono-oléfine mise en oeuvre dans la divulgation est avantageusement choisie dans le groupe comprenant les oléfines de formule $CH_2$=CH-$C_xH_{2x+1}$ (x = 1 à 6), le styrène et les dérivés du styrène.

De manière avantageuse, la chaîne polymère A est un polymère de :

- 70 à 100 % molaire de monomère éthylène, plus avantageusement 95 à 99.9 mol% ;
- 0 à 30 mol% d'une alpha-mono-oléfine choisie dans le groupe comprenant les alpha-mono-oléfines, le styrène et tout autre monomère de type vinyl-aromatique, plus avantageusement 0,1 à 5mol% ; avantageusement lorsque l'alpha-mono-oléfine est choisie dans le groupe comprenant les oléfines de formule $CH_2$=CH-$C_xH_{2x+1}$ (x = 1 à 6), le styrène et les dérivés du styrène.

Selon un mode de réalisation préféré, la chaîne polymère A est un polyéthylène linéaire, c'est-à-dire un homopolymère de l'éthylène de formule $-(CH_2-CH_2)_n-$, n étant un nombre entier avantageusement de 7 à 3600, et encore plus avantageusement de 17 à 360.

La chaîne polymère A présente avantageusement une masse molaire moyenne en nombre comprise entre 200 g/mol et 100 000 g/mol, plus avantageusement entre 500 g/mol et 50 000 g/mol, plus avantageusement entre 500 g/mol et 20 000 g/mol, et encore plus avantageusement entre 500 g/mol et 10 000 g/mol.

La masse molaire moyenne en nombre peut notamment être obtenue par chromatographie d'exclusion stérique selon les connaissances générales de l'homme du métier. A titre indicatif, l'homme du métier pourra se référer au protocole décrit dans le document WO 2010/139450.

L'agent de transfert de formule (II) qui peut être dans un procédé de préparation d'une polyoléfine de formule (I), (III) ou (IV), fait partie de la présente invention :

$$Z\text{-}A\text{-}(CH_2)_p\text{-}B' \qquad (III)$$

$$Z\text{-}A\text{-}(CH_2)_p\text{-}B \qquad (IV)$$

Comme déjà indiqué, l'agent de transfert de formule (II) $Y((CH_2)_p\text{-}B')_m$ est défini par :

- m = 2 ou 3 ;
- Y est un alcalino-terreux lorsque m = 2 ;
- Y est l'aluminium lorsque m = 3 ;
- B' est choisi dans le groupe comprenant $N(SiMe_3)_2$ et $N(SiMe_2CH_2CH_2SiMe_2)$ ;
- p est un nombre entier de 1 à 50, avantageusement de 1 à 11.

Selon un autre mode de réalisation ne faisant pas partie de la présente invention, B' pourrait être choisi parmi para-$C_6H_4(NMe_2)$ ; para-$C_6H_4(OMe)$ ; $C_6H_4(N(SiMe_3)_2)$ ; $C_6F_5$ ; $C_3F_7$ ; $C_6F_{13}$ ; et $CH(OCH_2CH_2O)$.

Selon un mode de réalisation particulier, le nombre entier p est au moins égal à 1. Il peut donc être de 1 à 50 ou de 1 à 11.

Les polyoléfines de formules (I), (III) et (IV) sont avantageusement linéaires. Les polyoléfines de formule (III) et (IV) présentent avantageusement deux extrémités de chaînes distinctes, pouvant réagir de manière sélective eu égard à leur différence de réactivité.

A titre d'exemple, le procédé de synthèse de l'agent de transfert de formule (II) comprend avantageusement la réaction du métal (notamment lorsque m = 2 et Y = Mg) avec un composé de formule $X\text{-}(CH_2)_p\text{-}B'$, X étant un halogène, de préférence un atome de brome ; B' étant choisi dans le groupe comprenant $N(SiMe_3)_2$ et $N(SiMe_2CH_2CH_2SiMe_2)$ ; et p étant un nombre entier de 1 à 50.

Selon un autre mode de réalisation ne faisant pas partie de la présente invention, B' pourrait être choisi parmi para-$C_6H_4(NMe_2)$ ; para-$C_6H_4(OMe)$ ; $C_6H_4(N(SiMe_3)_2)$ ; $C_6F_5$ ; $C_3F_7$ ; $C_6F_{13}$ ; et $CH(OCH_2CH_2O)$.

En revanche, lorsque Y = Al, l'agent de transfert est avantageusement préparé à partir de $AlCl_3$.

Le groupement B' de l'agent de transfert de formule (II) est $N(SiMe_2CH_2CH_2SiMe_2)$ ou $N(SiMe_3)_2$.

L'agent de transfert est avantageusement un composé de magnésium.

Selon un mode de réalisation particulier, il s'agit du $Mg[(CH_2)_p\text{-}N(SiMe_2CH_2CH_2SiMe_2)]_2$ ou $Mg[(CH_2)_p\text{-}N(SiMe_3)_2]_2$, avec p = 1 à 11, et de manière préférentielle p = 3.

La polyoléfine de formule (I) est avantageusement obtenue dans un système catalytique multi-composants comportant l'agent de transfert de formule (II) et un catalyseur. Ce catalyseur correspond à un composé permettant de générer une espèce active pour catalyser la formation de la chaîne polymère A. Il peut notamment s'agir d'un catalyseur à base d'un métal de transition ou d'un lanthanide, avantageusement d'un métallocène comprenant la structure de base $(Cp^1)(Cp^2)M$ ou $E(Cp^1)(Cp^2)M$.

Ce catalyseur permet de mettre en oeuvre la polymérisation catalytique de l'oléfine (éthylène et le cas échéant alpha-mono-oléfine) par coordination / insertion, un grand nombre de chaînes polymère étant produites par molécule

de catalyseur.

De manière générale, M est un métal du groupe 3, ou 4, ou un lanthanide.

En outre, $Cp^1$ est avantageusement un groupement cyclopentadiényle, fluorényle, ou indényle, ce groupement étant substitué ou non.

$Cp^2$ est avantageusement un groupement cyclopentadiényle, fluorényle, ou indényle, ce groupement étant substitué ou non.

Le groupement E est un groupe pontant les ligands $Cp^1$ et $Cp^2$. Les métallocènes dont les deux groupements $Cp^1$ et $Cp^2$ sont pontés sont communément appelés ansa-métallocènes. Le groupement E peut notamment être de formule $M'R^1R^2$ dans laquelle M' est un élément du groupe 14 ou une chaîne d'éléments du groupe 14 ; $R^1$ et $R^2$ étant identiques ou différents, et choisis dans le groupe comprenant les groupes alkyles ou aryles comprenant de 1 à 20 atomes de carbone. Le groupement E peut être par exemple - $C(CH_3)_2$-, -$CH_2$-$CH_2$-, ou -$Si(CH_3)_2$-.

Le composé à base d'un métal de transition ou d'un lanthanide peut également présenter une structure non métallocène telle que celles définies dans la revue de V.C. Gibson et S.K. Spitzmesser (Chem. Rev. 2003, 103, 283-315).

Le cas échéant, notamment lorsque le métal du composé n'est pas un lanthanide ou un métal du groupe 3, un co-catalyseur peut être utilisé en combinaison avec le catalyseur décrit ci-avant. L'homme du métier saura choisir le co-catalyseur approprié.

Selon un mode de réalisation particulièrement préféré, le catalyseur peut être obtenu à partir du composé métallocène de formule $(C_5Me_5)_2MX_2Li(OEt_2)_2$, M étant un métal du groupe 3 ou un lanthanide, et X étant préférentiellement un halogène. Il peut avantageusement s'agir d'un composé de lanthanide, de préférence du Nd, et notamment du $(C_5Me_5)_2NdCl_2Li(OEt_2)_2$.

Le catalyseur peut également être est obtenu à partir d'un composé métallocène de lanthanide comme par exemple les composés $\{(Me_2Si(C_{13}H_8)_2)Nd(\mu\text{-}BH_4)[(\mu\text{-}BH_4)Li(THF)]\}_2$, $Me_2Si(C_{13}H_8)_2)Nd(BH_4)(THF)$, $(Me_2Si(2,7\text{-}tBu_2\text{-}C_{13}H_6)_2)Nd(BH_4)(\mu\text{-}BH_4)Li(\text{éther})_3$, $Me_2Si(3\text{-}Me_3Si\text{-}C_5H_3)_2NdBH_4(THF)_2$ ;$\{Me_2Si(3\text{-}Me_3Si\text{-}C_5H_3)_2NdCl\}$ ; $\{Me_2Si(C_5H_4)(C_{13}H_8)NdCl\}$ ; et $[Me_2Si(C_5H_4)(C_{13}H_8)Nd(BH_4)_2][Li(THF)]$.

Le catalyseur peut notamment être obtenu à partir d'un composé métallocène borohydrure d'un lanthanide, tel que décrit dans le document WO 2007/054224.

Peuvent être également préparés selon la présente divulgation les dérivés de la polyoléfine mono fonctionnelle de formule (I), c'est-à-dire toute polyoléfine issue de la terminaison, par exemple par hydrolyse, d'au moins une des extrémités de chaîne de la polyoléfine de formule (I) et de la modification du groupement B' selon des réactions connues de l'homme du métier.

Ainsi, dans le procédé de préparation de la polyoléfine ayant au moins un bout de chaîne fonctionnalisé, l'étape (a) est avantageusement suivie d'une étape (b) qui consiste à faire réagir le composé de formule (I) avec un agent de terminaison de chaîne.

Cet agent de terminaison peut avantageusement être un agent de fonctionnalisation.

Il permet le clivage des liaisons Y-A de la polyoléfine de formule (I).

Selon un mode de réalisation particulier, l'étape (b) peut être suivie d'une étape (c) qui est une réaction de modification de la fonction B', de préférence une réaction de déprotection, en une fonction B.

L'étape (b) peut notamment être une étape de fonctionnalisation par Z qui peut être réalisée :

- par addition successive de $B(OR)_3$ et de $NMe_3O$, R étant un alkyle en $C_1$-$C_4$ ; ou
- par addition d'un agent de fonctionnalisation pouvant notamment être choisi dans le groupe comprenant l'iode ; le soufre ; l'oxygène ; les radicaux nitroxyles ; le dioxyde de carbone ; les chlorosilanes tels que $ClSiR_2H$ ou $Cl_2SiRH$ (R étant un groupement alkyle possédant de 1 à 20 carbones) ; l'isobutène ; les alcoxysilanes tels que $SiMe_2(OMe)_2$, $SiX(OMe)_3$, $SiXMe(OMe)_2$ (X = $(CH_2)_nY$ avec n = 1 à 20 et Y = OMe, $NMe_2$, $S(SiMe_2(CMe_3))$, $N(SiMe_3)_2$) ; les halogénures d'alkyle ; les halogénures d'aryle ; les halogénures de vinyle ; et les disulfures tels que le $CS_2$ ou le disulfure de tétraéthylthiuram.

L'étape de fonctionnalisation par Z est avantageusement mise en oeuvre par addition d'iode, ou de soufre, ou de disulfure de tétraéthylthiuram ou de O,O-diéthyl dithiobis[thioformate].

Cette deuxième étape du procédé consiste en fait à introduire le groupement Z par clivage des liaisons Y-A du composé de formule (I).

L'un des avantages du procédé de préparation de la polyoléfine consiste à pouvoir réaliser toutes les étapes (a-b ou a-c) *in situ.* En effet, contrairement aux procédés de l'art antérieur concernant la préparation de polyoléfines monofonctionnelles ou téléchéliques, le procédé décrit ci-dessus permet de s'affranchir des étapes de séparation/isolation/purification des composés intermédiaires en ce que la deuxième étape peut être mise en oeuvre *in situ.* La polymérisation et la fonctionnalisation peuvent être avantageusement réalisées successivement, sans étape intermédiaire de purification, et notamment dans le même réacteur.

En outre, la polymérisation présente un caractère pseudo-vivant, ce procédé permet de contrôler la masse

molaire pour obtenir une distribution de masses molaires relativement étroite, avantageusement inférieure à 1,5.

De manière générale, les conditions expérimentales permettent de contrôler la masse molaire de la polyoléfine de formule (III) ou (IV) mais également son taux de fonctionnalisation des extrémités par les groupements B' (ou B) et Z. Le taux de fonctionnalisation peut être estimé par %F :

%F = 100 × [nombre d'extrémités B' (ou B) par chaîne] × [nombre d'extrémités Z par chaîne], le nombre maximal d'extrémités B' (ou B) par chaîne étant fixé au maximum

le nombre maximal d'extrémités B' (ou B) par chaîne étant fixé au maximum à 1.

Les nombres d'extrémités B' (ou B) et Z sont déterminés par RMN (résonance magnétique nucléaire), selon les techniques connues de l'homme du métier.

Le taux de fonctionnalisation peut ainsi être avantageusement supérieur à 70 %, et encore plus avantageusement supérieur à 90 %. En d'autres termes, le procédé de l'invention permet de produire avantageusement au moins 90 % de polyoléfines monofonctionnelles ou téléchéliques.

De manière avantageuse, l'étape (b) permet d'obtenir une polyoléfine de formule (III) ou (IV)

$Z\text{-}A\text{-}(CH_2)_p\text{-}B'$ (III)

$Z\text{-}A\text{-}(CH_2)_p\text{-}B$ (IV)

dans lesquelles :

- A est une chaîne polymère obtenue par homopolymérisation de l'éthylène ou par copolymérisation de l'éthylène et d'une alpha-mono-oléfine ;
- B' est choisi dans le groupe comprenant $N(SiMe_3)_2$ et $N(SiMe_2CH_2CH_2SiMe_2)$ ;
- B est la fonction B' ou une fonction dérivant de B' ;
- p est un nombre entier de 1 à 50, avantageusement de 1 à 11 ;
- Z est une fonction choisie dans le groupe constitué par l'atome d'hydrogène ; les halogènes ; thiols ; les dérivés de thiols ; azotures ; aminés ; alcools ; fonction acide carboxylique ; isocyanates ; silanes ; dérivés phosphorés ; dithioesters ; dithiocarbamates ; dithiocarbonates ; trithiocarbonates ; alkoxyamines ; fonction vinyle ; diènes ; et le groupement $\text{-}A\text{-}(CH_2)_p\text{-}B'$.

Selon un autre mode de réalisation ne faisant pas partie de la présente invention, B' pourrait être choisi parmi para-$C_6H_4(NMe_2)$ ; para-$C_6H_4(OMe)$ ; $C_6H_4(N(SiMe_3)_2)$ ; $C_6F_5$ ; $C_3F_7$ ; $C_6F_{13}$ ; et $CH(OCH_2CH_2O)$.

Lorsque Z = H, la polyoléfine de formule (III) ou (IV) est avantageusement obtenue par clivage des liaisons Y-A par hydrolyse, préférentiellement avec un constituant protique comme le méthanol.

Lorsque Z ≠ H, la polyoléfine de formule (III) ou (IV) est téléchélique. Dans ce cas, les groupements A, B', B sont tels que décrits ci-avant alors que Z est une fonction choisie dans le groupe constitué par les halogènes ; thiols ; les dérivés de thiols ; azotures ; aminés ; alcools ; fonction acide carboxylique ; isocyanates ; silanes ; dérivés phosphorés ; dithioesters ; dithiocarbamates ; dithiocarbonates ; trithiocarbonates ; alkoxyamines ; fonction vinyle ; diènes ; et le groupement $\text{-}A\text{-}(CH_2)_p\text{-}B'$.

La présente divulgation permet également la préparation de dérivés de la polyoléfine téléchélique (Z ≠ H) de formule (III) ou (IV), c'est-à-dire toute polyoléfine issue de la fonctionnalisation d'au moins une des extrémités de chaîne de la polyoléfine téléchélique de formule (III) ou (IV). Il s'agit donc de la modification du groupement B' et/ou du groupement Z, selon des réactions connues de l'homme du métier.

La modification du groupement B' en groupement B permet d'obtenir une polyoléfine de formule (IV) $Z\text{-}A\text{-}(CH_2)_p\text{-}B$, dans laquelle B désigne une fonction dérivant de la fonction B'. De manière générale, la fonction B désigne soit la fonction B', soit une fonction dérivant de B' c'est-à-dire une fonction obtenue par modification de B selon les réactions connues de l'homme du métier. La fonction B peut notamment être $NH_2$, $NH_3^+X^-$ (avec X = halogène par exemple).

Selon un mode de réalisation particulièrement préféré, le groupement Z dans les formules (III) et (IV) est un halogène - encore plus avantageusement un atome d'iode, I - ou un dithiocarbamate tel que le diéthyldithiocarbamate ($S\text{-}C(=S)\text{-}N(Et)_2$) ou un dithiocarbonate tel que le S-C(=S)-OEt.

Les extrémités de la chaîne polymère principale de la polyoléfine téléchélique de formule (III) ou (IV) peuvent présenter deux groupements, en l'occurrence B' (ou B) et Z dont les réactivités respectives sont très différentes l'une de l'autre, la fonction Z étant avantageusement distincte de la fonction B' (ou B).

Par conséquent, et selon un mode de réalisation particulièrement préféré, la polyoléfine téléchélique est de

formule (IV) B-$(CH_2)_p$-A-Z, Z étant préférentiellement un atome d'iode ou un dithiocarbamate, p étant un nombre entier de 0 à 11, B étant préférentiellement le groupement $NH_3Cl$. De manière avantageuse, la chaîne polymère A est le polyéthylène $(CH_2-CH_2)_n$, n étant un nombre entier de 7 à 3600, avantageusement de 17 à 360.

Selon un mode de réalisation particulier, la polyoléfine téléchélique est de formule (IV), et est obtenue lorsque :

- A est le polyéthylène ;
- A présente une masse molaire moyenne comprise entre 500 et 100000 g/mol ;
- B = $ClH_3N$ ;
- p = 1 à 11 ;
- Y = Mg ;
- Z = I;
- la préparation du composé de formule (I) est réalisée en présence du catalyseur mettant enjeu le composé $(C_5Me_5)_2NdCl_2Li(OEt_2)_2$.

Elle peut avantageusement être obtenue selon le procédé qui consiste à :

- préparer le composé de formule (I) (avec A = $(CH_2-CH_2)_n$, B' = $(CH_2)_p$-$N(SiMe_2CH_2CH_2SiMe_2)$; p = 3 ; n = 16 à 360) par polymérisation d'éthylène, $CH_2=CH_2$, en présence de $(C_5Me_5)_2NdX_2Li(OEt_2)_2$, X étant un halogène, et de l'agent de transfert $Mg((CH_2)_3-N(SiMe_2CH_2CH_2SiMe_2))_2$ ;
- fonctionnaliser par Z, par addition de $I_2$ et modification du groupement B' en groupement B = $ClH_3N$ de manière à obtenir la polyoléfine téléchélique $ClH_3N-(CH_2)_3-(CH_2-CH_2)_n-I$.

S'agissant des dérivés de la polyoléfine monofonctionnelle ou téléchélique de formule (III) ou (IV), ils peuvent, comme déjà dit, être obtenus par le procédé décrit ci-avant, notamment par modification d'au moins une des extrémités de la polyoléfine téléchélique, de préférence la fonction B' (ou B), dans une étape ultérieure à la fonctionnalisation par Z.

En effet, eu égard aux groupements B' (ou B) et Z de la polyoléfine téléchélique de formule (III) ou (IV), les deux groupements peuvent être aisément modifiés ultérieurement par chimie organique pour introduire de nouveaux groupements soit par l'intermédiaire du groupement Z soit par l'intermédiaire du groupement B' (ou B) comme il a été par exemple détaillé sur des polyéthylènes monofonctionnels par D'Agosto, Boisson et al. (R. Briquel, J. Mazzolini, T. Le Bris, O. Boyron, F. Boisson, F. Delolme, F. D'Agosto, C. Boisson, R. Spitz Angew. Chem. Int. Eng. Ed., 47, 9311-9313 (2008) ; J. Mazzolini, R. Briquel, I. Mokthari, O. Boyron, V. Monteil, F. Delolme, D. Gigmes, D. Bertin, F. D'Agosto, C. Boisson Macromolecules 43, 7495-7503 (2010) ; M. Unterlass, E. Espinosa, F. Boisson, F. D'Agosto, C. Boisson, K. Ariga, I. Khalakhan, R. Charvet, JP. Hill Chem. Commun. 47, 7057-7059 (2011); Mazzolini, O. Boyron, V. Monteil, D. Gigmes, D. Bertin, F. D'Agosto, C. Boisson Macromolecules 44, 3381-3387 (2011) ; E. Espinosa, M. Glassner, C. Boisson, C. Barner Kowollik, F. D'Agosto Macromol. Rapid Commun. 32, 1447-1453 (2011) I. German, W. Khelifi, S. Norsic, C. Boisson, F. D'Agosto Angew. Chem. Int. Engl. Ed., 52, 3438-3441(2013)).

Ainsi, la polyoléfine téléchélique de formule (III), B'-$(CH_2)_p$-A-Z (ou (IV) B-$(CH_2)_p$-A-Z), peut être ultérieurement modifiée.

Les polyoléfines (III) ou (IV) (téléchélique ou non) et leurs dérivés peuvent être utilisés en tant qu'additif pour la modification de matériaux organiques, inorganiques, hybrides ou composites, ou en tant que synthon réactif pour la polymérisation.

Les domaines d'intérêts de la présente divulgation concernent notamment, et de manière non limitative, les additifs pour les polyoléfines, les modificateurs de charges organique et inorganique, la cosmétique, les adhésifs, les encres, les cires, les lubrifiants, ou les revêtements.

Les polyoléfines téléchéliques ou non (Z = H) et leurs dérivés peuvent être mises en oeuvre dans le cadre de la préparation d'architectures ou de matériaux originaux à base de polyéthylène et de polypropylène notamment.

Contrairement aux procédés de l'art antérieur, la présente divulgation permet d'obtenir en une seule étape une polyoléfine (téléchélique ou non) comprenant un bout de chaîne de type ammonium, amine, acétal, aldéhyde, éther fluoroalkyle, ou perfluoroaryle. C'est la nature de l'agent de transfert et notamment son groupement B', qui permet cette fonctionnalisation directe, et rapide. La présence d'une fonction ammonium en bout de chaîne est particulièrement attrayante dans le but de faciliter son incorporation dans des structures organiques ou inorganiques plus complexes.

L'invention et les avantages qui en découlent ressortiront mieux des exemples suivants donnés afin d'illustrer l'invention et non de manière limitative.

## EXEMPLES DE REALISATION DE L'INVENTION

Des polyéthylènes de formule (IV) ont été préparés, à partir de l'agent de transfert $MgR_2$ (R = $(CH_2)_3$-$N(SiMe_2CH_2CH_2SiMe_2)$ ou $(CH_2)_3$-$N(SiMe_3)_2$) décrit ci-après.

**Résonance magnétique nucléaire (RMN).** La spectroscopie RMN haute résolution a été effectuée sur un spectromètre Bruker DRX 400 opérant à 400 MHz pour le proton. Les acquisitions ont été faites à 363 K en utilisant une sonde 5 mm QNP. Les échantillons ont été analysés à une concentration de 5-15 % en masse. Un mélange de tétrachloroéthylène (TCE) et de benzène deutéré ($C_6D_6$) (2/1 v/v) a été utilisé comme solvant. Les déplacements chimiques sont donnés en unité ppm, relativement au tétraméthylsilane comme référence interne.
**Chromatographie d'exclusion stérique (SEC).** Les analyses de Chromatographie d'exclusion stérique à haute température (HT-SEC) ont été réalisées en utilisant un appareil Viscotek (de Malvern Instruments) équipé avec 3 colonnes (PLgel Olexis 300 mm x 7 mm I. D. de Agilent Technologies) et de 3 détecteurs (réfractomètre, viscosimètre et diffusion de la lumière). 200 $\mu$L d'une solution de l'échantillon à une concentration de 5 $mg.mL^{-1}$ ont été élués dans le 1,2,4-trichlorobenzene en utilisant un débit de 1 mL $min^{-1}$ à 150°C. La phase mobile a été stabilisée par du 2,6-di(tert-butyl)-4-methylphénol (200 mg $L^{-1}$). Le logiciel OmniSEC a été utilisé pour l'acquisition et l'analyse des données. Les masses molaires sont calculées en utilisant une courbe de calibration obtenue à partir de polyéthylènes standards ($M_p$ : 170, 395, 750, 1110, 2155, 25000, 77500, 126000 $g.mol^{-1}$) de Polymer Standard Service (Mainz).

Exemple 1.

Préparation de l'agent de transfert $MgR_2$ (R = 1-propyl-2,2,5,5-tétramethyl-1-aza-2,5-disilacyclopentane = $(CH_2)_3$-$N(SiMe_2CH_2CH_2SiMe_2)$)

Dans un ballon de 100 mL, on introduit sous atmosphère inerte d'argon, 2,6 g (2 équivalents) de magnésium puis 50 mL de dibutyl éther sec.
On place le ballon dans un bain froid à 0°C et on additionne ensuite goutte à goutte 13,3 mL (15 g, 1 équivalent) de 1-(3-bromopropyl)-2,2,5,5-tétramethyl-1-aza-2,5-disilacyclopentane. On laisse la solution sous agitation magnétique revenir progressivement à la température ambiante.
On récupère ensuite la solution de 1-(3-bromopropyl)-2,2,5,5-tétramethyl-1-aza-2,5-disilacyclopentane magnésium en canulant dans un Schlenk sous argon afin d'éliminer le magnésium qui n'a pas réagi.
On ajoute sur cette solution, 5,5 mL (1,2 équivalent) de dioxane afin de déplacer l'équilibre de Schlenk pour former le composé $MgR_2$ (R = 1-propyl-2,2,5,5-tétramethyl-1-aza-2,5-disilacyclopentane) et précipiter $MgBr_2$.
Cette solution est ensuite filtrée sous argon sur célite afin de récupérer $MgR_2$ en solution dans le dibutyl éther.

Exemple 2.

Préparation de l'agent de transfert $MgR_2$ (R = 1-propyl-2,2,5,5-tétramethyl-1-aza-2,5-disilacyclopentane = $(CH_2)_3$-$N(SiMe_2CH_2CH_2SiMe_2)$)

Dans un ballon de 100 mL, on introduit sous atmosphère inerte d'argon, 2,6 g (2 équivalents) de magnésium puis 50 mL de THF sec.
A température ambiante, on additionne ensuite goutte à goutte 13,3 mL (15 g, 1 équivalent) de 1-(3-bromopropyl)-2,2,5,5-tétramethyl-1-aza-2,5-disilacyclopentane. On laisse la solution sous agitation magnétique pendant une heure.
On récupère ensuite la solution de 1-(3-bromopropyl)-2,2,5,5-tétramethyl-1-aza-2,5-disilacyclopentane magnésium en canulant dans un Schlenk sous argon afin d'éliminer le magnésium qui n'a pas réagi.
On ajoute sur cette solution, 5,5 mL (1,2 équivalent) de dioxane afin de déplacer l'équilibre de Schlenk pour former le composé $MgR_2$ (R = 1-propyl-2,2,5,5-tétramethyl-1-aza-2,5-disilacyclopentane) et précipiter $MgBr_2$.
Cette solution est ensuite filtrée sous argon sur célite afin de récupérer $MgR_2$ en solution dans le THF.
Le THF est ensuite distillé sous vide à température ambiante et le $MgR_2$ est ensuite mis en solution dans le dibutyl éther.
$^1$H NMR (THF-d8 - 400 MHz - 298K) $\delta$ : ppm = 2,63 (m, -$\mathbf{CH_2}$-N), 1,60 (m, -$\mathbf{CH_2}$-$CH_2$-N), 0,64 (s, N-$Si(CH_3)_2$-$\mathbf{CH_2}$-), 0,01 (s, N-Si($\mathbf{CH_3}$)$_2$-$CH_2$-), -0,78 (Mg-$\mathbf{CH_2}$-)

Exemple 3.

Préparation de la polyoléfine Z-A-$(CH_2)_3$-B (avec Z = H ; A = $(CH_2\text{-}CH_2)_n$, et B = $NH_3Cl$)

Dans un ballon contenant 400 mL de toluène sec, on introduit 21.7 mL (4.77 mmol) de $MgR_2$ préparé suivant l'exemple 2 (0,22 M dans le dibutyl éther).
La solution est transférée sous atmosphère d'argon dans un réacteur de 500 mL.
On transfère ensuite une solution de 20,7 mg de composé $(C_5Me_5)_2NdCl_2Li.(OEt_2)_2$ (32 $\mu$mol).

Puis l'argon est éliminé sous vide et le réacteur est pressurisé à 3 bars d'éthylène à 70°C. La pression est maintenue constante dans le réacteur pendant la polymérisation à l'aide d'un réservoir.
Quand la quantité d'éthylène désirée a été consommée, le réacteur est dégazé et la température est ramenée à 20°C.
Une solution de méthanol/HCl est ajoutée et le milieu est agité pendant 1 heure.
Le polymère est ensuite filtré, lavé au méthanol puis séché.
On récupère 15.3 g de polyéthylène $CH_3-(CH_2CH_2)_n-(CH_2)_3NH_3Cl$ (fonctionnalité 82 %, Mn = 1850 $g.mol^{-1}$ par RMN).
$^1H$ NMR (2/1 v/v TCE/$C_6D_6$, 400 MHz, 363K) $\delta$ ppm = 8,29 (large, -N**H**$_3$Cl), 2,87 (t, J = 7 Hz, -C**H**$_2$-NH$_3$Cl), 1,73 (quin, J = 7 Hz, -C**H**$_2$CH$_2$NH$_3$Cl) 1.24 (large, (C**H**$_2$C**H**$_2$)$_n$), 0,83 (t, J = 7 Hz, -CH$_2$-C**H**$_3$).
$^{13}C$ NMR (2/1 v/v TCE/$C_6D_6$, 101 MHz, 363K) $\delta$ ppm = 39,72, 32,21 30,00 ($(CH_2CH_2)_n$), 29,61, 29,25, 27,80, 26.85, 22,90, 14,04.

Exemple 4.

Préparation de la polyoléfine Z-A-$(CH_2)_3$-B (avec Z = H ; A = $(CH_2-CH_2)_n$, et B = $NH_2$)

Dans un ballon contenant 400 mL de toluène sec, on introduit 21,7 mL (4.77 mmol) de $MgR_2$ préparé suivant l'exemple 2 (0,22 M dans le dibutyl-éther).
La solution est transférée sous atmosphère d'argon dans un réacteur de 500 mL.
On transfère ensuite une solution de 21,4 mg de composé $(C_5Me_5)_2NdCl_2Li.(OEt_2)_2$ (33 $\mu$mol).
Puis l'argon est éliminé sous vide et le réacteur est pressurisé à 3 bars d'éthylène à 70°C.
La pression est maintenue constante dans le réacteur pendant la polymérisation à l'aide d'un réservoir.
Quand la quantité d'éthylène désirée a été consommée, le réacteur est dégazé et la température est ramenée à 20°C.
Une solution de méthanol/HCl est ajoutée et le milieu est agité pendant 1 heure.
La suspension résultante est versée dans une solution méthanol/NaOH 1M, et agitée pendant 1 heure.
Le polymère est ensuite filtré, lavé au méthanol puis séché.
On récupère 15.0 g de polyéthylène $CH_3-(CH_2CH_2)_n-(CH_2)_3NH_2$ (fonctionnalité 80 %, Mn = 1820 $g.mol^{-1}$ par RMN).
$^1H$ NMR (2/1 v/v TCE/$C_6D_6$, 400 MHz, 363K) $\delta$ ppm = 2,53 (large, C**H**$_2$-NH$_2$), 1,24 (large, (C**H**$_2$C**H**$_2$)$_n$), 0,83 (t, J = 7 Hz, -CH$_2$-C**H**$_3$).
$^{13}C$ NMR (2/1 v/v TCE/$C_6D_6$, 101 MHz, 363K) $\delta$ ppm = 42,55, 34,44, 32,21, 30,00 ($(CH_2CH_2)_n$), 29,61, 27,25, 22,90, 14,04.

Exemple 5.

Préparation de la polyoléfine téléchélique Z-A-$(CH_2)_3$-B (avec Z = I ; A = $(CH_2-CH_2)_n$, et B = $NH_3Cl$)

Dans un ballon contenant 400 mL de toluène sec, on introduit 8,4 mL de $MgR_2$ préparé suivant l'exemple 2 (en solution dans le dibutyl éther à 0,3 M).
La solution est transférée sous atmosphère d'argon dans un réacteur de 500 mL.
On transfère ensuite une solution de 10,7 mg de composé $(C_5Me_5)_2NdCl_2Li.(OEt_2)_2$ (rapport molaire Mg/Nd = 150).
Puis l'argon est éliminé sous vide et le réacteur est pressurisé à 3 bars d'éthylène à 70°C. La pression est maintenue constante dans le réacteur pendant la polymérisation à l'aide d'un réservoir.
Quand la quantité d'éthylène désirée a été consommée, le réacteur est dégazé et la température est ramenée à 20°C.
Une solution de 2,5 g d'iode dans le THF (rapport molaire I/Mg = 4) est ajoutée et le milieu est agité pendant 2 heures.
Une solution de méthanol/HCl est ajoutée et le milieu est agité pendant 1 heure.
La suspension résultante est versée dans du méthanol puis le polymère est filtré, lavé au méthanol puis séché.
On récupère 4,5 g de polyéthylène téléchélique I-$(CH_2CH_2)_n-(CH_2)_3NH_3Cl$ (fonctionnalité 100 %, Mn = 1350 $g.mol^{-1}$ par RMN).
$^1H$ NMR (2/1 v/v TCE/$C_6D_6$, 400 MHz, 363K) $\delta$ ppm = 8,29 (large, -N**H**$_3$Cl), 2,94 (t, J = 7 Hz, -C**H**$_2$I), 2,87 (t, J = 7 Hz, -C**H**$_2$-NH$_3$Cl), 1,73 (quin, J = 7 Hz, -C**H**$_2$CH$_2$NH$_3$Cl), 1,66 (quin, J = 7 Hz, -C**H**$_2$CH$_2$I), 1,24 (large, (C**H**$_2$C**H**$_2$)$_n$).
$^{13}C$ NMR (2/1 v/v TCE/$C_6D_6$, 101 MHz, 363K) $\delta$ ppm = 39,72, 30.77, 30,00 ($(CH_2CH_2)_n$), 29,68, 29,25, 28,81, 27,80, 26,85, 4,91.

Exemple 6.

Préparation de l'agent de transfert $MgR_2$ (R = N,N-bis(trimethylsilyl)propan-1-amine = $(CH_2)_3$-$N(SiMe_3)_2$)

Dans un ballon de 100 mL, on introduit sous atmosphère inerte d'argon, 2,6 g (2 équivalents) de magnésium puis 50 mL de THF sec.

A température ambiante, on additionne ensuite goutte à goutte 15g (1 équivalent) de 3-bromo-N,N-bis(trimethylsilyl)propan-1-amine. On laisse la solution sous agitation magnétique pendant une heure.

On récupère ensuite la solution de 3-bromo-N,N-bis(trimethylsilyl)propan-1-amine magnésium en canulant dans un Schlenk sous argon afin d'éliminer le magnésium qui n'a pas réagi.

On ajoute sur cette solution, 5,5 mL (1,2 équivalent) de dioxane afin de déplacer l'équilibre de Schlenk pour former le composé $MgR_2$ (R = N,N-bis(trimethylsilyl)propan-1-amine) et précipiter $MgBr_2$.

Cette solution est ensuite filtrée sous argon sur célite afin de récupérer $MgR_2$ en solution dans le THF.

Le THF est ensuite distillé sous vide à température ambiante et le $MgR_2$ est ensuite mis en solution dans le dibutyl éther pour obtenir une solution à 0,40 M.

Exemple 7.

Préparation de la polyoléfine Z-A-$(CH_2)_3$-B (avec Z = H ; A = $(CH_2\text{-}CH_2)_n$, et B = $NH_3Cl$)

Dans un ballon contenant 400 mL de toluène sec, on introduit 6,3 mL (2,52 mmol) de $MgR_2$ préparé suivant l'exemple 6 (0,40 M dans le dibutyl éther).

La solution est transférée sous atmosphère d'argon dans un réacteur de 500 mL.

On transfère ensuite une solution de 10,7 mg de composé $(C_5Me_5)_2NdCl_2Li.(OEt_2)_2$ (16 $\mu$mol).

Puis l'argon est éliminé sous vide et le réacteur est pressurisé à 3 bars d'éthylène à 70°C. La pression est maintenue constante dans le réacteur pendant la polymérisation à l'aide d'un réservoir.

Quand la quantité d'éthylène désirée a été consommée, le réacteur est dégazé et la température est ramenée à 20°C.

Une solution de méthanol/HCl est ajoutée et le milieu est agité pendant 1 heure.

Le polymère est ensuite filtré, lavé au méthanol puis séché.

On récupère 5,3 g de polyéthylène $CH_3\text{-}(CH_2CH_2)_n\text{-}(CH_2)_3NH_3Cl$ (fonctionnalité 84 %, Mn = 1440 $g.mol^{-1}$ par RMN).

$^1H$ NMR (2/1 v/v TCE/$C_6D_6$, 400 MHz, 363K) $\delta$ ppm = 8,62 (large, -N**H**$_3$Cl), 2,86 (-C**H**$_2$-$NH_3Cl$), 1,75 (quin, J = 7 Hz, -C**H**$_2$$CH_2NH_3Cl$) 1,29 (large, (C**H**$_2$C**H**$_2$)$_n$), 0,86 (t, J = 7 Hz, -$CH_2$-C**H**$_3$).

Exemple 8.

Préparation de la polyoléfine Z-A-$(CH_2)_3$-B (avec Z = H ; A = $(CH_2\text{-}CH_2)_n$, et B = $NH_2$)

Dans un ballon contenant 400 mL de toluène sec, on introduit 6,3 mL (2,52 mmol) de $MgR_2$ préparé suivant l'exemple 6 (0,40 M dans le dibutyl éther).

La solution est transférée sous atmosphère d'argon dans un réacteur de 500 mL.

On transfère ensuite une solution de 10,7 mg de composé $(C_5Me_5)_2NdCl_2Li.(OEt_2)_2$ (16 $\mu$mol).

Puis l'argon est éliminé sous vide et le réacteur est pressurisé à 3 bars d'éthylène à 70°C. La pression est maintenue constante dans le réacteur pendant la polymérisation à l'aide d'un réservoir.

Quand la quantité d'éthylène désirée a été consommée, le réacteur est dégazé et la température est ramenée à 20°C.

Une solution de méthanol/HCl est ajoutée et le milieu est agité pendant 1 heure.

La suspension résultante est versée dans une solution méthanol/NaOH 1M, et agitée pendant 1 heure.

Le polymère est ensuite filtré, lavé au méthanol puis séché.

On récupère 5,0 g de polyéthylène $CH_3\text{-}(CH_2CH_2)_n\text{-}(CH_2)_3NH_2$ (fonctionnalité 84 %, Mn = 1440 $g.mol^{-1}$ par RMN).

$^1H$ NMR (2/1 v/v TCE/$C_6D_6$, 400 MHz, 363K) $\delta$ ppm = 2,53 (large, C**H**$_2$-$NH_2$), 1,24 (large, (C**H**$_2$C**H**$_2$)$_n$), 0,83 (t, J = 7 Hz, -$CH_2$-C**H**$_3$).

Exemple 9.

Préparation de la polyoléfine Z-A-$(CH_2)_3$-B (avec Z = OH ; A = $(CH_2-CH_2)_n$, et B = $NH_3Cl$)

Dans un ballon contenant 400 mL de toluène sec, on introduit 6,3 mL (2,52 mmol) de $MgR_2$ préparé suivant l'exemple 6 (0,40 M dans le dibutyl éther).

La solution est transférée sous atmosphère d'argon dans un réacteur de 500 mL.

On transfère ensuite une solution de 10,7 mg de composé $(C_5Me_5)_2NdCl_2Li.(OEt_2)_2$ (16 $\mu$mol).

Puis l'argon est éliminé sous vide et le réacteur est pressurisé à 3 bars d'éthylène à 70°C. La pression est maintenue constante dans le réacteur pendant la polymérisation à l'aide d'un réservoir.

Quand la quantité d'éthylène désirée a été consommée, le réacteur est dégazé et on additionne sous argon une solution de triéthyl borate $B(OEt)_3$ (2,55 mL dans 10 mL de toluène B/Mg = 6). Le milieu est agité pendant 2h puis on additionne sous argon une solution de triméthylamine N oxyde TAO (2,5 g dans 20 mL de DMF TAO/B=1,5).

Le milieu est agité pendant 2h puis la température est ramenée à 20°C.

Une solution de méthanol/HCl est ajoutée et le milieu est agité pendant 1 heure.

Le polymère est ensuite filtré, lavé au méthanol puis séché.

On récupère 6,3 g de polyéthylène HO-$CH_2$-$(CH_2CH_2)_n$-$(CH_2)_3NH_3Cl$ (fonctionnalité 70 %, Mn = 1940 g.mol$^{-1}$ par RMN).
$^1H$ NMR (2/1 v/v TCE/$C_6D_6$, 400 MHz, 363K) $\delta$ ppm = 8,63 (large, -N**H**$_3$Cl), 3,40 (t, J = 7 Hz, HO-C**H**$_2$-) 2,86 (large, -C**H**$_2$-$NH_3Cl$), 1,75 (quin, J = 7 Hz, -C**H**$_2$$CH_2NH_3Cl$) 1,29 (large, (C**H**$_2$C**H**$_2$)$_n$).

Exemple 10.

Préparation de la polyoléfine Z-A-$(CH_2)_3$-B (avec Z = S-(C=S)-N$(CH_2-CH_3)_2$ ; A = $(CH_2-CH_2)_n$, et B = $NH_3Cl$)

Dans un ballon contenant 400 mL de toluène sec, on introduit 6,3 mL (2,52 mmol) de $MgR_2$ préparé suivant l'exemple 6 (0,40 M dans le dibutyl éther).

La solution est transférée sous atmosphère d'argon dans un réacteur de 500 mL.

On transfère ensuite une solution de 10,7 mg de composé $(C_5Me_5)_2NdCl_2Li.(OEt_2)_2$ (16 $\mu$mol).

Puis l'argon est éliminé sous vide et le réacteur est pressurisé à 3 bars d'éthylène à 70°C. La pression est maintenue constante dans le réacteur pendant la polymérisation à l'aide d'un réservoir.

Quand la quantité d'éthylène désirée a été consommée, le réacteur est dégazé et on additionne sous argon une solution de tetraethylthiuram disulfide (1,5 g, 2 équivalents dans 20 mL de toluène).

Le milieu est agité pendant 2 h puis la température est ramenée à 20°C.

Une solution de méthanol/HCl est ajoutée et le milieu est agité pendant 1 heure.

Le polymère est ensuite filtré, lavé au méthanol puis séché.

On récupère 5,6 g de polyéthylène $(CH_3-CH_2)_2$N-(S=C)-S-$CH_2$-$(CH_2CH_2)_n$-$(CH_2)_3NH_3Cl$ (fonctionnalité 100 %, Mn = 1480 g.mol$^{-1}$ par RMN).
$^1H$ NMR (2/1 v/v TCE/$C_6D_6$, 400 MHz, 363K) $\delta$ ppm = 8,59 (large, -N**H**$_3$Cl), 3,64 (q, J = 7 Hz ($CH_3$-C**H**$_2$)$_2$N-(S=C)-S), 3,30 (t, J = 7 Hz, $(CH_3-CH_2)_2$N-(S=C)-S-C**H**$_2$-) 2,88 (large, -C**H**$_2$-$NH_3Cl$), 1,77 (large, -C**H**$_2$$CH_2NH_3C1$), 1,67 (quin, J = 7 Hz, $(CH_3-CH_2)_2$N-(S=C)-S-$CH_2$-C**H**$_2$-), 1,29 (large, (C**H**$_2$C**H**$_2$)$_n$), 1,04 (t, J = 7 Hz (C**H**$_3$-$CH_2$)$_2$N-(S=C)-S).

Exemple 11.

Préparation de la polyoléfine téléchélique Z-A-$(CH_2)_3$-B (avec Z = I ; A = $(CH_2-CH_2)_n$. et B = $NH_3Cl$)

Dans un ballon contenant 400 mL de toluène sec, on introduit 6,3 mL (2,52 mmol) de $MgR_2$ préparé suivant l'exemple 6 (0,40 M dans le dibutyl éther).

La solution est transférée sous atmosphère d'argon dans un réacteur de 500 mL.

On transfère ensuite une solution de 10,7 mg de composé $(C_5Me_5)_2NdCl_2Li.(OEt_2)_2$ (16 $\mu$mol).

Puis l'argon est éliminé sous vide et le réacteur est pressurisé à 3 bars d'éthylène à 70°C. La pression est maintenue constante dans le réacteur pendant la polymérisation à l'aide d'un réservoir.

Quand la quantité d'éthylène désirée a été consommée, le réacteur est dégazé et la température est ramenée à 20°C.

Une solution de 2,5 g d'iode dans le THF (rapport molaire I/Mg = 4) est ajoutée et le milieu est agité pendant 2 heures.

Une solution de méthanol/HCl est ajoutée et le milieu est agité pendant 1 heure.

La suspension résultante est versée dans du méthanol puis le polymère est filtré, lavé au méthanol puis séché.

On récupère 6,3 g de polyéthylène téléchélique $I\text{-}(CH_2CH_2)_n\text{-}(CH_2)_3NH_3Cl$ (fonctionnalité 100 %, Mn = 1300 $g.mol^{-1}$ par RMN).
$^1H$ NMR (2/1 v/v TCE/$C_6D_6$, 400 MHz, 363K) δ ppm = 8,30 (large, $-N\mathbf{H}_3Cl$), 2,91 (t, J = 7 Hz, $-C\mathbf{H}_2I$), 2,86 (t, J = 7 Hz, $-C\mathbf{H}_2\text{-}NH_3Cl$), 1,73 (quin, J = 7 Hz, $-C\mathbf{H}_2CH_2NH_3Cl$), 1,63 (quin, J = 7 Hz, $-C\mathbf{H}_2CH_2I$), 1,26 (large, $(C\mathbf{H}_2C\mathbf{H}_2)_n$).

## Revendications

1. Composé de formule (II) $Y((CH_2)_p\text{-}B')_m$, dans laquelle :

   m = 2 ou 3 ;
   Y est un alcalino-terreux lorsque m = 2,
   Y est l'aluminium lorsque m = 3 ;
   B' est choisi dans le groupe comprenant $N(SiMe_3)_2$ et $N(SiMe_2CH_2CH_2SiMe_2)$ ;
   p est un nombre entier de 1 à 50.

2. Composé selon la revendication 1, ***caractérisé* en ce que** p est un nombre entier de 1 à 11.

3. Composé selon la revendication 1, ***caractérisé* en ce qu'**il correspond à la formule $Mg[(CH_2)_p\text{-}N(SiMe_2CH_2CH_2SiMe_2)]_2$, avec p = 1 à 11.

4. Composé selon la revendication 1, ***caractérisé* en ce qu'**il correspond à la formule $Mg[(CH_2)_p\text{-}N(SiMe_3)_2]_2$, avec p = 1 à 11.

5. Procédé de synthèse du composé de formule (II) $Y((CH_2)_p\text{-}B')_m$, comprenant la réaction du métal Y avec un composé de formule $X\text{-}(CH_2)_p\text{-}B'$ ;
   X étant un halogène ;
   m=2;
   Y=Mg;
   B' étant choisi dans le groupe comprenant $N(SiMe_3)_2$ et $N(SiMe_2CH_2CH_2SiMe_2)$ ;
   p étant un nombre entier de 1 à 50.

6. Procédé selon la revendication 5, ***caractérisé* en ce que** X est un atome de brome.

## Patentansprüche

1. Verbindung der Formel (II) $Y((CH_2)_p\text{-}B')_m$, in der:

   m = 2 oder 3;
   Y für ein Erdalkalimetall steht, wenn m = 2,
   Y für Aluminium steht, wenn m = 3;
   B' aus der Gruppe umfassend $N(SiMe_3)_2$ und $N(SiMe_2CH_2CH_2SiMe_2)$ ausgewählt ist;
   p für eine ganze Zahl von 1 bis 50 steht.

2. Verbindung nach Anspruch 1, **dadurch gekennzeichnet, dass** p für eine ganze Zahl von 1 bis 11 steht.

3. Verbindung nach Anspruch 1, **dadurch gekennzeichnet, dass** sie der Formel $Mg[(CH_2)_p\text{-}N(SiMe_2CH_2CH_2SiMe_2)]_2$ mit p = 1 bis 11 entspricht.

4. Verbindung nach Anspruch 1, **dadurch gekennzeichnet, dass** sie der Formel $Mg[(CH_2)_p\text{-}N(SiMe_3)_2]_2$ mit p = 1 bis 11 entspricht.

5. Verfahren zur Synthese der Verbindung der Formel (II) $Y((CH_2)_p\text{-}B')_m$, bei dem man ein Metall Y mit einer Verbindung der Formel $X\text{-}(CH_2)_p\text{-}B'$ umsetzt; wobei X für ein Halogen steht;
   m = 2;
   Y = Mg;
   wobei B' aus der Gruppe umfassend $N(SiMe_3)_2$ und $N(SiMe_2CH_2CH_2SiMe_2)$ ausgewählt ist;

wobei p für eine ganze Zahl von 1 bis 50 steht.

6. Verfahren nach Anspruch 5, **dadurch gekennzeichnet, dass** X für ein Bromatom steht.

**Claims**

1. Compound of formula (II) $Y((CH_2)_p\text{-}B')_m$, in which:

   m = 2 or 3;
   Y is an alkaline earth metal when m = 2,
   Y is aluminium when m = 3;
   B' is selected from the group comprising $N(SiMe_3)_2$ and $N(SiMe_2CH_2CH_2SiMe_2)$;
   p is an integer from 1 to 50.

2. Compound according to Claim 1, ***characterized* in that** p is an integer from 1 to 11.

3. Compound according to Claim 1, ***characterized* in that** it corresponds to the formula $Mg[(CH_2)_p\text{-}N(SiMe_2CH_2CH_2SiMe_2)]_2$, with p = 1 to 11.

4. Compound according to Claim 1, ***characterized* in that** it corresponds to the formula $Mg[(CH_2)_p\text{-}N(SiMe_3)_2]_2$, with p = 1 to 11.

5. Method for synthesis of the compound of formula (II) $Y((CH_2)_p\text{-}B')_m$, comprising the reaction of the metal Y with a compound of formula $X\text{-}(CH_2)_p\text{-}B'$;
   X being a halogen;
   m=2;
   Y=Mg;
   B' being selected from the group comprising $N(SiMe_3)_2$ and $N(SiMe_2CH_2CH_2SiMe_2)$;
   p being an integer from 1 to 50.

6. Method according to Claim 5, ***characterized* in that** X is a bromine atom.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- US 20070010639 A
- WO 2013135314 A
- US 20130274407 A
- WO 2007054224 A


### Littérature non-brevet citée dans la description


- **BOISSON ; D'AGOSTO et al.** *Angew Chem Int Ed Engl.,* 2013, vol. 52, 3438-3441
- End-capped Oligomers of Ethylene, Olefins and Dienes, by means of Coordinative Chain Transfer Polymerization using Rare Earth Catalysts. **T. CHENAL ; M. VISSEAUX.** Oligomerization of chemical and biological compounds. 2014, 3-30
- **HILLMYER et al.** *Macromolecules,* 1995, vol. 28, 7256-7261
- **BROOKHART.** *Macromolecules,* 2003, vol. 36, 3085
- A NOVEL THREE CARBON-AMINO GRIGNARD REAGENT - ITS USE IN AN EFFICIENT PYRROLIDINE SYNTHESIS. **BASHA F Z et al.** TETRAHEDRON LETTERS. PERGAMON, 1984, vol. 25, 5271-5274
- **V.C. GIBSON ; S.K. SPITZMESSER.** *Chem. Rev.,* 2003, vol. 103, 283-315
- **BOISSON.** *polyéthylènes monofonctionnels par D'Agosto*
- **R. BRIQUEL ; J. MAZZOLINI ; T. LE BRIS ; O. BOYRON ; F. BOISSON ; F. DELOLME ; F. D'AGOSTO ; C. BOISSON ; R. SPITZ.** *Angew. Chem. Int. Eng. Ed.,* 2008, vol. 47, 9311-9313
- **J. MAZZOLINI ; R. BRIQUEL ; I. MOKTHARI ; O. BOYRON ; V. MONTEIL ; F. DELOLME ; D. GIGMES ; D. BERTIN ; F. D'AGOSTO ; C. BOISSON.** *Macromolecules,* 2010, vol. 43, 7495-7503
- **M. UNTERLASS ; E. ESPINOSA ; F. BOISSON ; F. D'AGOSTO ; C. BOISSON ; K. ARIGA ; I. KHALAKHAN ; R. CHARVET ; JP. HILL.** *Chem. Commun.,* 2011, vol. 47, 7057-7059
- **MAZZOLINI ; O. BOYRON ; V. MONTEIL ; D. GIGMES ; D. BERTIN ; F. D'AGOSTO ; C. BOISSON.** *Macromolecules,* 2011, vol. 44, 3381-3387
- **E. ESPINOSA ; M. GLASSNER ; C. BOISSON ; C. BARNER KOWOLLIK ; F. D'AGOSTO.** *Macromol. Rapid Commun.,* 2011, vol. 32, 1447-1453
- **I. GERMAN ; W. KHELIFI ; S. NORSIC ; C. BOISSON ; F. D'AGOSTO.** *Angew. Chem. Int. Engl. Ed.,* 2013, vol. 52, 3438-3441